# EUROPEAN PATENT APPLICATION

(11) **EP 1 837 521 A1**
(43) Date of publication of application: **26.09.2007**
(21) Application number: 05816834.5
(22) Date of filing: 14.12.2005
(51) Int. Cl.: F04B 37/16, F16J 15/10

(54) **STRUCTURE FOR CONNECTING END PARTS AND VACUUM SYSTEM USING THE STRUCTURE**

(30) Priority: 20.12.2004 JP 2004368502
(71) Applicant: BOC Edwards Japan Limited, Tokyo 100-0006 (JP)
(72) Inventor: NAMIKI, Hirotaka, BOC EDWARDS JAPAN LIMITED, Yachiyo-shi, Chiba 2768523 (JP)
(74) Representative: Cloughley, Peter Andrew
(86) International application number: PCT/JP2005/022943
(87) International publication number: WO 2006/068014

(57) **Abstract**

Provided are a structure for connecting end parts capable of, with simple equipment, reducing vibration, isolating electrical noise, and obtaining a degree of freedom for an installation position, and a vacuum system using the structure.
A flange salient (202) has a recess (206) opening upwardly with a rectangle cross section and formed annularly around an inlet port (101). An O-ring (207) is provided within the recess (206). The O-ring (207) upwardly protrudes from the recess (206). Through holes (209) through which bolts (205) are penetrated are formed annularly in a plurality of places around a pump flange (201). Cylindrical elastic members (211) made of rubber are provided in the through holes (209). Further, inserted into each cylindrical elastic member (211) is a spacer collar (213) having a body (213a) in a cylindrical shape and a discal brim (213b).

## Description

### Technical Field

The present invention relates to a structure for connecting end parts and a vacuum system using the structure, and more particularly, to a structure for connecting end parts capable of, with simple equipment, reducing vibration, isolating electrical noise, and obtaining a degree of freedom for an installation position, and to a vacuum system using the structure.

### Background Art

As a result of the recent development of electronics, there is a rapid increase in the demand for semiconductor devices such as memories and integrated circuits.
Semiconductor devices are manufactured, for example, by doping highly pure semiconductor substrates with impurities to impart electrical properties thereto, or forming minute circuits on semiconductor substrates by etching.

To avoid the influence of dust or the like in the air, such operations have to be performed in a high vacuum chamber. To evacuate the chamber, a vacuum pump is generally used. In particular, a turbo-molecular pump, which is a kind of vacuum pump, is widely used since it involves little residual gas and is easy to maintain.

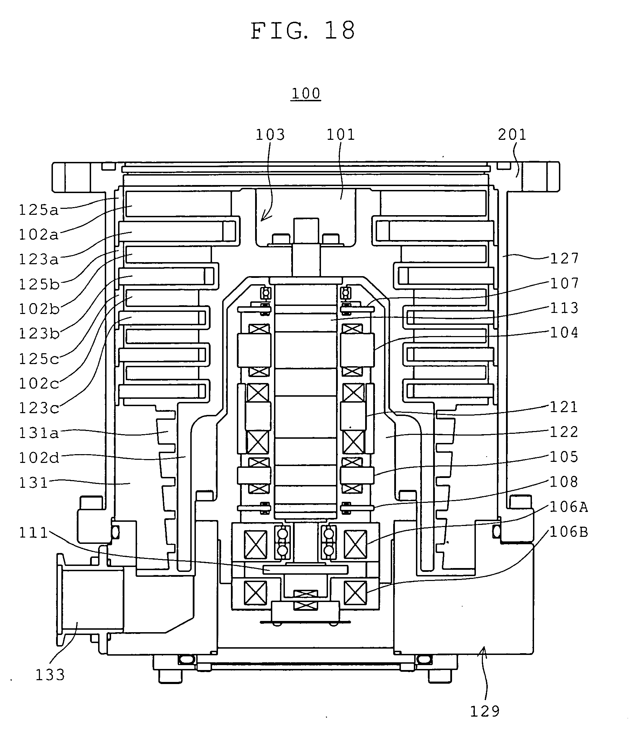

A semiconductor manufacturing process includes a number of steps in which various process gases are caused to act on semiconductor substrates, and the turbo-molecular pump is used not only to create a vacuum in a chamber, but also to discharge these process gases from the chamber. Fig. 18 is a longitudinal sectional view of one of these turbo-molecular pumps.

In Fig. 18, a turbo-molecular pump 100 has a pump flange 201 at the upper end of an outer cylinder 127. Formed inside the pump flange 201 is an inlet port 101. Inside the outer cylinder 127, there is provided a rotor 103 having in its periphery a plurality of rotary blades 102a, 102b, 102c, ... formed radially in a number of stages and constituting turbine blades for sucking and discharging gas.

At the centering of this rotor 103, there is mounted a rotor shaft 113, which is supported so as to levitate and controlled in position by, for example, a so-called 5-axis control magnetic bearing.
In an upper radial electromagnet 104, four electromagnets are arranged in pairs in the X- and Y-axis. An upper radial sensor 107 composed of four electromagnets is provided in close vicinity to and in correspondence with the upper radial electromagnet 104. The upper radial sensor 107 detects radial displacement of the rotor 103 and sends the detection result to a control device (not shown).

Based on the displacement signal from the upper radial sensor 107, the control device controls the excitation of the upper radial electromagnet 104 through a compensation circuit having a PID adjusting function, thereby adjusting the upper radial position of the rotor shaft 113.
The rotor shaft 113 is formed of a material having high magnetic permeability (e.g., iron), and is attracted by the magnetic force of the upper radial electromagnet 104. Such adjustment is conducted independently in the X- and Y-axis directions.

Further, a lower radial electromagnet 105 and a lower radial sensor 108 are arranged in the same manner as the upper radial electromagnet 104 and the upper radial sensor 107, adjusting the lower radial position of the rotor shaft 113 in the same manner as the upper radial position thereof.
Further, axial electromagnets 106A and 106B are arranged with a metal disc 111 having a circular plate-like shape and which is provided at the bottom of the rotor shaft 113 being therebetween. The metal disc 111 is formed of a material having high magnetic permeability like iron. To detect axial displacement of the rotor shaft 113, there is provided an axial sensor 109 whose axial displacement signal is sent to the control device.

And, based on this axial displacement signal, the axial electromagnets 106A and 106B are excitation-controlled through a compensation circuit having a PID adjusting function of the control device. The axial electromagnet 106A upwardly attracts the metal disc 111 by magnetic force, and the axial electromagnet 106B downwardly attracts the metal disc 111.
In this way, the control device appropriately adjusts the magnetic force exerted on the metal disc 111 by the axial electromagnets 106A and 106B to cause the rotor shaft 113 to magnetically levitate in the axial direction, supporting it in a space in a non-contact state.

A motor 121 is equipped with a plurality of magnetic poles, which are arranged circumferentially to surround the rotor shaft 113. The magnetic poles are controlled by the control device to rotate the rotor shaft 113 through an electromagnetic force acting between the rotor shaft 113 and the magnetic poles.
The motor 121 also has an RPM sensor (not shown) incorporated to output a detection signal, which is used for detection of RPM of the rotor shaft 113.

A phase sensor (not shown) is attached, for example, in the vicinity of the lower radial sensor 108 to detect the phase of rotation of the rotor shaft 113. From detection signals of the both phase sensor and the RPM sensor, the control device detects positions of the magnetic poles.

A plurality of stationary blades 123a, 123b, 123c, ... are arranged so as to be spaced apart from the rotary blades 102a, 102b, 102c, ... by small gaps. The rotary blades 102a, 102b, 102c, ... are inclined by a predetermined angle from a plane perpendicular to the axis of the rotor shaft 113 in order to convey the molecules of exhaust gas downwards through collision.
The stationary blades 123 are also inclined by a predetermined angle from a plane perpendicular to the axis of the rotor shaft 113, and arranged alternately with the rotary blades 102 so as to extend toward the inner side of the outer cylinder 127.

And, at one end, the stationary blades 123 are supported in a state in which they are fitted into the spaces between a plurality of stationary blade spacers 125a, 125b, 125c, ... stacked together.
The stationary blade spacers 125 are ring-like members which are formed, for example, of aluminum, iron, stainless steel, copper, or an alloy containing some of these metals as a component.

The outer cylinder 127 is fixed to the outer periphery of the stationary blade spacers 125 with a small gap therebetween. A base portion 129 is arranged at the bottom of the outer cylinder 127, and a threaded spacer 131 is arranged between the lower portion of the stationary blade spacers 125 and the base portion 129. An exhaust port 133 is formed in the portion of the base portion 129 below the threaded spacer 131, and communicates with the exterior.

The threaded spacer 131 is a cylindrical member formed of aluminum, copper, stainless steel, iron, or an alloy containing some of these metals as a component, and has in its inner peripheral surface a plurality of streaks of spiral thread grooves 131 a.
The direction of the spiral of the thread grooves 131a is determined such that when the molecules of the exhaust gas move in the rotating direction of the rotor 103, these molecules are conveyed toward the exhaust port 133.

At the lowermost portion of the row of rotary blades 102a, 102b, 102c, ... of the rotor 103, a rotary blade 102d extends vertically downwards. The outer peripheral surface of this rotary blade 102d is cylindrical, and juts out toward the inner peripheral surface of the threaded spacer 131 so as to be in close vicinity to the inner peripheral surface of the threaded spacer 131 with a predetermined gap therebetween.

The base portion 129 is a disc-like member forming the base portion of the turbo-molecular pump 100, and is generally formed of a metal, such as iron, aluminum, or stainless steel.
Further, the base portion 129 physically retains the turbo-molecular pump 100 and, at the same time, serves as a heat conduction path. Thus, it is desirable for the base portion 129 to be formed of a metal which has rigidity and high heat conductivity, such as iron, aluminum, or copper.

In this construction, when the rotor shaft 113 is driven by the motor 121 to rotate with the rotary blades 102, exhaust gas from the chamber is sucked in through the inlet port 101 by the action of the rotary blades 102 and the stationary blades 123.
The exhaust gas sucked in through the inlet port 101 flows between the rotary blades 102 and the stationary blades 123 to be conveyed to the base portion 129.

When the rotary blades 102 rotate, minute mechanical vibration and electrical noise are generated. Conventionally, in order to prevent the vibration and the noise from being transmitted to the chamber, an external damper is provided between the chamber and the turbo-molecular pump 100.

However, the employment of the external damper requires an installation space and causes the reduction in effective exhaust velocity due to a pipe resistance. There is also such a turbo-molecular pump as having an internal damper to save space and to prevent the reduction in the effective exhaust velocity. However, when the vibration generated is not so large as to require the external damper or the internal damper, it is desirable to reduce the vibration with a more simple and low-cost structure.

Further, there is disclosed an example in which the casing and the flange of the turbo-molecular pump are separated from each other to provide elastic members and a vacuum seal therebetween, thereby reducing the vibration; see Japanese Unexamined Utility Model Application Publication 60-28298.

### Disclosure of the Invention

### Problems to be Solved by the Invention

In Japanese Unexamined Utility Model Application Publication 60-28298, the turbo-molecular pump is unnecessarily enlarged by separating the casing and the flange from each other. In addition, it is difficult for elastic members, each of which is made of rubber and has screws at both ends thereof, to support the large-size pump, because the strength of rubber in the stretch direction is lower than that in the compression direction.

Further, when the turbo-molecular pump is disordered, it is impossible for the turbo-molecular pump by itself to prevent torque from being applied to the rubbers. Anyway, if the worst happens, there is a fear that the pump falls off with only the flange being left.

The present invention has been made in view of the above problems in the prior art. It is an object of the present invention to provide a structure for connecting end parts capable of, with simple equipment, reducing vibration, isolating electrical noise, and obtaining a degree of freedom for an installation position, and a vacuum system using the structure.

### Means for solving the Problems

Thus, the present invention (Claim 1) provides a structure for connecting end parts, including: a first end part; a second end part in a hollowed shape situated in the position to be evacuated and opposed to the first end part; a sealing member having elasticity arranged between the second end part and the first end part, characterized in that when the evacuation is performed, the first end part and the second end part come close to each other due to the difference between the inner pressure and the atmospheric pressure, causing elastic deformation of the sealing member, and at the same time a predetermined gap is formed between the first end part and the second end part with the sealing member interposed therebetween.

The sealing member has elasticity and keeps airtightness between the inside and the outside. When the evacuation is performed in the second end part, the sealing member secures the airtightness to cause the difference between the inner pressure and the atmospheric pressure. Due to the difference between the inner pressure and the atmospheric pressure, the first end part and the second end part come close to each other. At this time, the sealing member is elastically deformed, while a predetermined gap is formed between the first end part and the second end part with the sealing member interposed therebetween.

As described above, the sealing member is arranged within the gap between the first end part and the second end part to keep the airtightness, while absorbing the vibration generated in one end part and reducing the vibration transmitted to the other end part. Electrical isolation is also performed. The structure is simple, which enables to lower cost and save space. The reduction in the effective exhaust velocity caused when the evacuation is performed can be prevented. Further, the reduction in the effective exhaust velocity can be prevented by incorporating the structure of the present invention into the casing of the pump.

Further, the present invention (Claim 2) provides a structure for connecting end parts, including: a first end part; a second end part in a hollowed shape situated in the position to be evacuated and opposed to the first end part; at least one through hole formed in the second end part; fixing means penetrated through the through hole to be fixed to the first end part while preventing the second end part from falling off; a first elastic member arranged between the fixing means and the through hole, characterized in that when the evacuation is performed, the second end part comes close to the first end part due to the difference between the inner pressure and the atmospheric pressure, whereby the second end part is released from a solid-to-solid contact.

The through hole is formed in the second end part. The fixing means is penetrated through the through hole to be fixed to the first end part while preventing the second end part from falling off. The first elastic member is arranged between the fixing means and the through hole. When the evacuation is performed, the second end part comes close to the first end part due to the difference between the inner pressure and the atmospheric pressure. Thus, the second end part is released from the solid-to-solid contact to be contacted only with the first end part.

As described above, the vibration generated in one end part is absorbed and the vibration transmitted to the other end part is reduced. Electrical isolation is also performed. The degree of freedom for a fixation position of the first end part and the second end part can be obtained. The structure is simple, which enables to lower cost and save space. The reduction in the effective exhaust velocity caused when the evacuation is performed can be prevented. Further, the reduction in the effective exhaust velocity can be prevented by incorporating the structure of the present invention into the casing of the pump. Even in the case where any member provided in the second end part undergoes destruction, etc., it is safe because the fixing means can prevent the second end part from falling off.

Further, the present invention (Claim 3) provides a structure for connecting end parts, including: a first end part; a second end part in a hollowed shape situated in the position to be evacuated and opposed to the first end part; a sealing member having elasticity arranged between the second end part and the first end part; at least one through hole formed in the second end part; fixing means penetrated through the through hole to be fixed to the first end part while preventing the second end part from falling off; a first elastic member arranged between the fixing means and the through hole, characterized in that when the evacuation is performed, the first end part and the second end part come close to each other due to the difference between the inner pressure and the atmospheric pressure, causing elastic deformation of the sealing member, and at the same time a predetermined gap is formed between the first end part and the second end part with the sealing member interposed therebetween, and the second end part is released from a solid-to-solid contact while being contacted with the first elastic member.

The first end part and the second end part are elastically connected to each other by the sealing member, while the second end part and the fixing means are elastically connected to each other by at least one first elastic member.
When the evacuation is performed, the sealing member absorbs the vibration caused in a first direction, while the at least one first elastic member absorbs the vibration caused in a second direction. Thus, the vibration caused in all directions is effectively absorbed. Electrical isolation is also performed.

Further, the present invention (Claim 4) provides a structure for connecting end parts, further including a spacer collar arranged between the fixing means and the first elastic member, characterized in that the solid-to-solid contact is generated between the second end part and one of the spacer collar and the fixing means.

The spacer collar can control the fixation performed by the fixing means. Thus, it is possible to secure an appropriate elasticity with respect to the first elastic member and the sealing member.

Further, the present invention (Claim 5) provides a structure for connecting end parts, characterized in that the sealing member is retained by a recess (or recesses) formed in at least one of the first end part and the second end part, or retained by a centering.

Thus, the position of the sealing member can be retained.

Further, the present invention (Claim 6) provides a structure for connecting end parts, including: a first end part; a second end part in a hollowed shape situated in the position to be evacuated and opposed to the first end part; a sealing member having elasticity arranged at the second end part; a recess for holding the sealing member; at least one through hole formed in the second end part; fixing means penetrated through the through hole to be fixed to the first end part while preventing the second end part from falling off, characterized in that a tolerance range for the height of the sealing member when the fixing means is fixed to the first end part is within the range of the difference between a minimum acceptable dimension for the height of the sealing member before the fixation is performed and a maximum acceptable dimension for the height of the sealing member when the evacuation is performed.

If the above described state is secured, the vacuum sealing can be surely performed when the assembly is completed, and the second end part can be surely made apart from the metal parts of the fixing means and the spacer collar when the evacuation is performed.

Further, the present invention (Claim 7) provides a structure for connecting end parts, including: a first end part; a second end part in a hollowed shape situated in the position to be evacuated and opposed to the first end part; a sealing member having elasticity arranged at the second end part; a recess for holding the sealing member; at least one through hole formed in the second end part; fixing means penetrated through the through hole to be fixed to the first end part while preventing the second end part from falling off; a spacer collar arranged between the fixing means and the through hole, characterized in that before the fixing means is fixed to the first end part, a dimension gained by adding the height from the bottom surface of the second end part to the bottom surface of the recess to the height of the sealing member is larger than the height of the body of the spacer collar, and when the evacuation is performed, a dimension gained by adding the height from the bottom surface of the second end part to the bottom surface of the recess to the height of the sealing member is smaller than the height of the body of the spacer collar.

Thus, when the fixing means is fixed to the first end part to complete assembly, the sealing member is crushed to perform vacuum sealing. Meanwhile, when the evacuation is performed, the sealing member is further crushed and the second end part is surely made apart from the metal parts of the fixing means and the spacer collar.

Further, the present invention (Claim 8) provides a structure for connecting end parts, further including a second elastic member arranged at the second end part, characterized in that when the evacuation is performed, the second end part comes close to the first end part due to the difference between the inner pressure and the atmospheric pressure, whereby the second elastic member is pushed onto the first end part.

When the evacuation is performed, the second end part comes close to the first end part due to the difference between the inner pressure and the atmospheric pressure, whereby the second elastic member is pushed onto the first end part. Thus, the second elastic member can support a part or the whole of the load generated due to the difference between the inner pressure and the atmospheric pressure, and can reduce the load applied to the sealing member, for example, used together with the second elastic member. The second elastic member may, for example, be annularly provided in succession, or be partially provided in at least one place.

Further, the present invention (Claim 9) provides a structure for connecting end parts, characterized in that the second elastic member is formed to be unified with the first elastic member.

The first elastic member can be cut out by incorporating the functions of the first elastic member into the second elastic member.
Thus, the number of components can be reduced.

Further, the present invention (Claim 10) provides a structure for connecting end parts, characterized in that a bolt (205) is provided as the fixing means (205).

Thus, the structure can be simplified.

Further, the present invention (Claim 11) provides a structure for connecting end parts, further including a brim arranged at the spacer collar for preventing the second end part from falling off.

Thus, the structure can be simplified, and moreover, the second end part can be effectively prevented from falling off.

Further, the present invention (Claim 12) provides a structure for connecting end parts, characterized in that at least one of the outer periphery of the spacer collar and the inner periphery of the through hole is (or are) formed to be tapered.

When the tapered configuration as described above is employed, the first elastic member may be cut out.
As described above, the position for fixation can be easily determined, the solid-to-solid contact between the through hole and the spacer collar can be prevented, even if the first elastic member is cut out, when the evacuation is performed, and the second end part can be effectively prevented from falling off.

Further, the present invention (Claim 13) provides a vacuum system having a structure for connecting end parts, characterized in that one of the first end part and the second end part is a flange arranged at any portion between a predetermined device to be evacuated and a vacuum pump for evacuating the inside of the device.

Thus, the installation position of the vacuum pump can be freely set. The structure is simple, which enables to lower cost and save space. The reduction in the effective exhaust velocity caused when the evacuation is performed can be prevented. Further, the reduction in the effective exhaust velocity can be prevented by incorporating the structure of the present invention into the casing of the pump. Even in the case where the vacuum pump undergoes destruction, etc., it is safe because the fixing means can prevent the second end part from falling off. Shock-absorbing effect can also be expected with respect to the sealing member, the first elastic member, and the second elastic member.

### Effect of the Invention

As described above, according to the present invention, when the evacuation is performed, the sealing member arranged within the gap between the first end part and the second end part keeps the airtightness, while absorbing the vibration generated in one end part and reducing the vibration transmitted to the other end part. Electrical isolation is also performed. The structure is simple, which enables to lower cost and save space. The reduction in the effective exhaust velocity caused when the evacuation is performed can be prevented. Further, the reduction in the effective exhaust velocity can be prevented by incorporating the structure of the present invention into the casing of the pump.

Further, when the evacuation is performed, due to the provision of the first elastic member arranged between the fixing means and the through hole, the second end part is released from a solid-to-solid contact to be contacted with the first elastic member. Therefore, even in the case where any member provided in the second end part undergoes destruction, etc., it is safe because the fixing means can prevent the second end part from falling off.

### Brief Description of Drawings

[Fig. 1] Fig. 1 is a schematic block diagram of a first embodiment of the present invention.
[Fig. 2] Fig. 2 is an enlarged longitudinal sectional view of a region A enclosed by a dotted line in Fig. 1.
[Fig. 3] Fig. 3 is a perspective block diagram (assembly diagram) showing the surroundings of a pump flange.
[Fig. 4] Fig. 4 is a diagram showing how a bolt is penetrated through a spacer collar and screwed into a device-side flange.
[Fig. 5] Fig. 5 is a diagram showing an example in which a gap is generated between an O-ring and the device-side flange.
[Fig. 6] Fig. 6 is a diagram showing a state in which the inside of the turbo-molecular pump is in a vacuum state.
[Fig. 7] Fig. 7 is a graph showing a vibration reducing effect in the radial direction of the turbo-molecular pump.
[Fig. 8] Fig. 8 is a graph showing a vibration reducing effect in the axial direction of the turbo-molecular pump.
[Fig. 9] Fig. 9 is a diagram showing an example employing a connecting structure of the present invention.
[Fig. 10] Fig. 10 is a partial longitudinal sectional view of a second embodiment of the present invention.
[Fig. 11] Fig. 11 is a perspective block diagram (assembly diagram) showing the surroundings of the pump flange.
[Fig. 12] Fig. 12 is a diagram showing an example in which an annular elastic member and a cylindrical elastic member are unified with each other.
[Fig. 13] Fig. 13 is a partial longitudinal sectional view of a third embodiment of the present invention.
[Fig. 14] Fig. 14 is a partial longitudinal sectional view of a fourth embodiment of the present invention.
[Fig. 15] Fig. 15 is a diagram showing a state in which the inside of the turbo-molecular pump is in a vacuum state.
[Fig. 16] Fig. 16 is a partial longitudinal sectional view of a fifth embodiment of the present invention.
[Fig. 17] Fig. 17 is a transition diagram showing the height dimension of the O-ring.
[Fig. 18] Fig. 18 is a longitudinal sectional view of the turbo-molecular pump.

### Description of References

100 ... turbo-molecular pump
101 ... inlet port
127 ... outer cylinder
201, 241, 301 ... pump flange
202 ... flange salient
203 ... device-side flange
205, 335 ... bolt
206, 305 ... recess
207 ... O-ring
209, 239, 259, 329 ... through hole
211, 231 ... cylindrical elastic member
213, 253, 333 ... spacer collar
213b, 333b ... brim
215 ... gap
233 ... annular elastic member
243 ... centering
321 ... inlet port cylinder
303 ... outer cylinder separation member
323 ... bellows

### Best Mode for Carrying Out the Invention

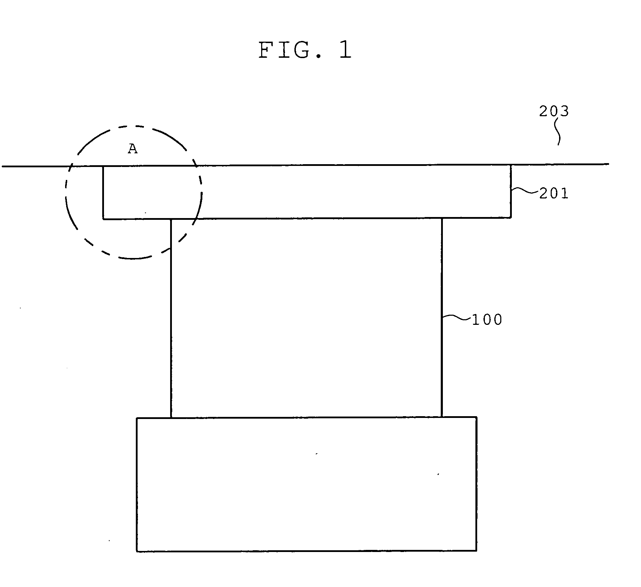

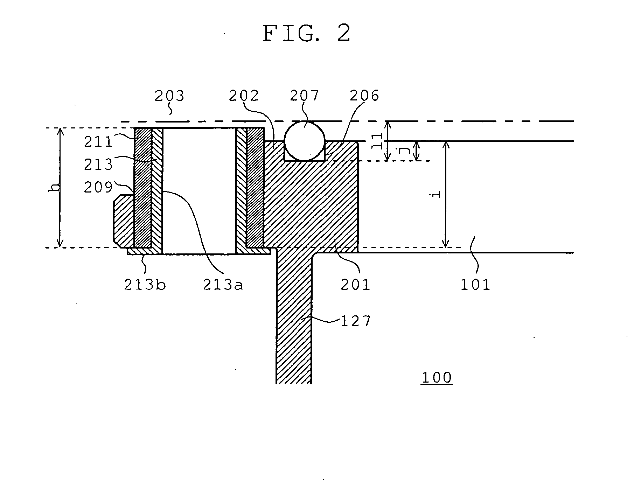

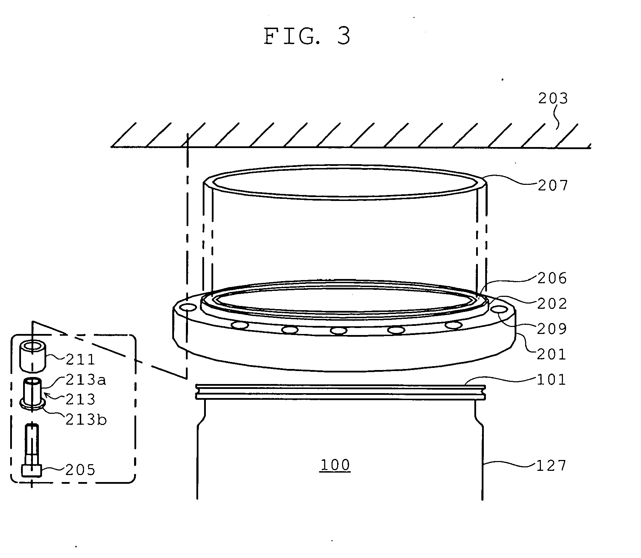

In the following, embodiments of the present invention will be described. Fig. 1 is a schematic block diagram of a first embodiment of the present invention. In Fig. 1, a device-side flange 203 of a vacuum chamber, etc. is connected and fixed by a plurality of bolts 205 to the pump flange 201 formed at the top of the turbo-molecular pump 100. Fig. 2 is a partial enlarged longitudinal sectional view of a region A, which is the region enclosed by a dotted line in Fig. 1. Fig. 3 is a perspective block diagram (assembly diagram) showing the surroundings of the pump flange in the case where the flange and the pump are separated from each other. Although not shown in the drawings, female screws are formed in the bottom surface of the pump flange 201 so that the turbo-molecular pump 100 may be fixed thereto by clampers or bolts.

A flange salient 202 protrudes upwardly from the top surface of the pump flange 201, forming a bump therebetween. The flange salient 202 has a recess 206 opening upwardly with a rectangle cross section and formed annularly around the inlet port 101. An O-ring 207 is provided within the recess 206. Conventionally, the depth of the recess is determined, based on the thickness of the O-ring, to be smaller than the thickness of the O-ring by 1 to 1.5 mm or so (according to Japanese Industrial Standards, etc.) so that the O-ring 207 may be appropriately filled in the recess 206 without causing any gap therebetween when the pump flange 201 and the device-side flange 203 are connected and fixed to each other by the bolts 205.

However, the height of the recess 206 according to the present invention is determined to be lower than that according to Japanese Industrial Standards, etc. by a predetermined length, thereby the O-ring 207 protrudes from the recess 206 in the height direction.

Through holes 209 through which the bolts 205 are penetrated are formed annularly in a plurality of places around the pump flange 201. The cylindrical elastic members 211 made of rubber are provided in the through holes 209. Further, inserted into each cylindrical elastic member 211 is a spacer collar 213 having a body 213a in a cylindrical shape and a discal brim 213b arranged at the bottom thereof. The diameter of the brims 213b is larger than that of the through holes 209, thereby the brims 213b can retain the pump flange 201.

As shown in Fig. 2, when the fixation is not performed by the bolts 205, the height of the spacer collars 213 and that of the cylindrical elastic members 211 are equated to each other, higher than the height of the pump flange 201, and lower than the top of the O-ring 207 protruding from the recess 206 of the pump flange 201.

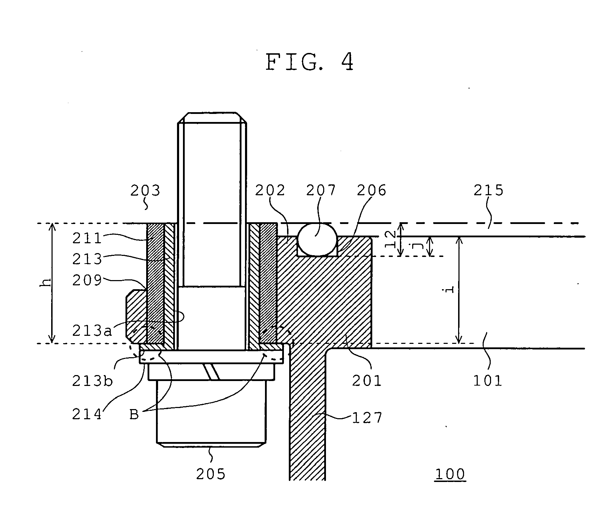

As shown in Fig. 4, the bolts 205 are penetrated through the spacer collars 213 with washers 214 interposed therebetween, and are screwed into the female screws (not shown) formed in the device-side flange 203. At this time, the fixation performed by the bolts 205 is controlled by the height of the spacer collars 213. When the bolts 205 are fixed to the device-side flange 203, the O-ring 207 (having a diameter of 6 mm, for example) is compressed to be partially deformed in the height direction. At this time, a gap 215 of 0.5 mm or so is formed between the bottom surface of the device-side flange 203 and the top surface of the pump flange 201. In the regions indicated by a reference B, the pump flange 201 and the brims 213b of the spacer collars 213 are contacted with each other due to the elastic force of the O-ring 207.

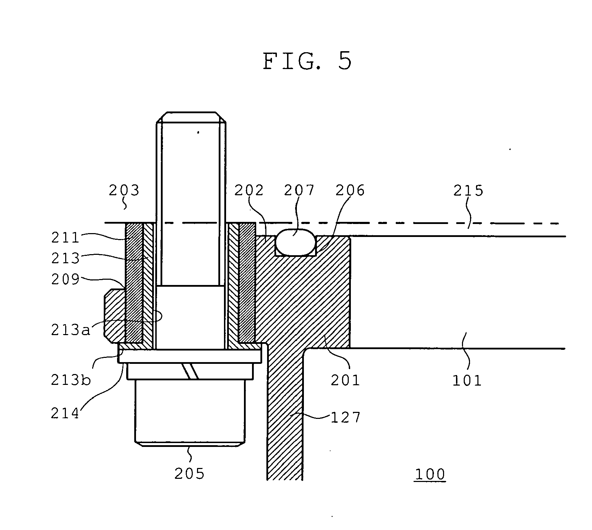

Fig. 5 shows an undesirable example in which a gap is generated between the O-ring 207 and the device-side flange 203. When the compression is performed, it is desirable for the O-ring 207 to retain the elastic force and to be partially deformed in the height direction.

Next, the operation of the first embodiment of the present invention will be described.

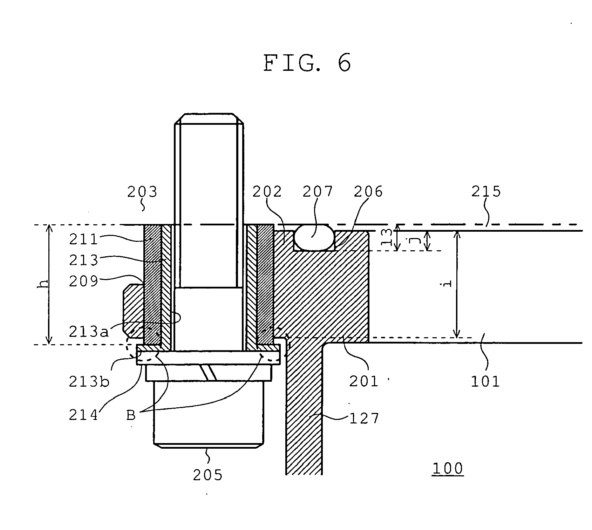

In Fig. 4, before the turbo-molecular pump 100 is started, the O-ring 207 is partially deformed in the height direction, and the pump flange 201 and the brims 213b of the spacer collars 213 are contacted with each other. When the turbo-molecular pump 100 is started, the inside of the turbo-molecular pump 100 becomes a vacuum state. The atmospheric pressure is upwardly applied to the turbo-molecular pump 100. Thus, as shown in Fig. 6, the spacer collars 213 made of solid material are not displaced in the height direction, while the turbo-molecular pump 100 gradually moves upward according to the difference between the inner pressure and the atmospheric pressure, resisting the elastic force of the O-ring 207. At this time, in the regions indicated by the reference B, the contact between the pump flange 201 and the brims 213b of the spacer collars 213 is released, and the pump flange 201 contacts only with the cylindrical elastic members 211.

Specifically, the top surface of the pump flange 201 is elastically connected to the bottom surface of the device-side flange 203 by the O-ring 207, while the pump flange 201 is elastically connected to the spacer collars 213 and the bolts 205 by cylindrical elastic members 211.

Thus, the O-ring 207 can secure the airtightness, and further, the O-ring 207 and the cylindrical elastic members 211 can prevent the vibration generated in the operation of the turbo-molecular pump 100 from being transmitted through the solid-to-solid contact. The cylindrical elastic members 211 are provided annularly and uniformly in a plurality of places around the pump flange 201. Thus, due to the elastic action of the O-ring 207 and the cylindrical elastic members 211, the vibration caused in all directions including the vertical and horizontal directions can be absorbed.

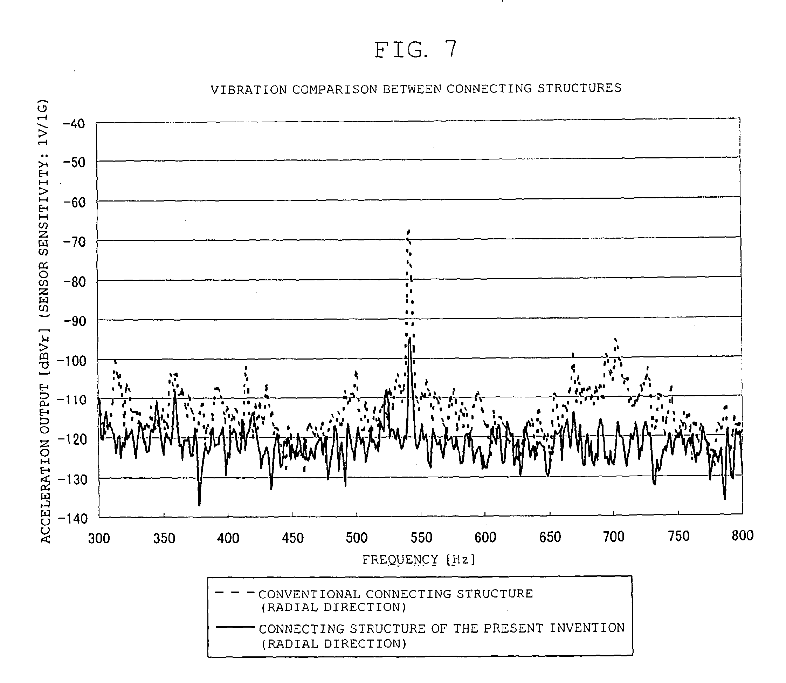

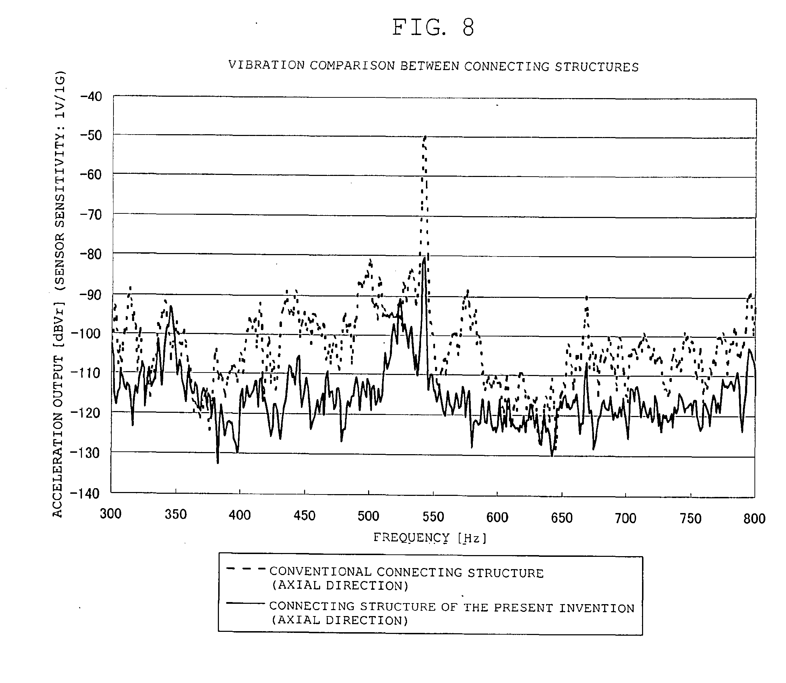

Fig. 7 and Fig. 8 each show the vibration reducing effect calculated through experiment. Fig. 7 is a graph showing the vibration reducing effect in the radial direction of the turbo-molecular pump. The horizontal axis shows the frequency in the operation of the turbo-molecular pump, while the vertical axis shows the acceleration of the vibration. With respect to the turbo-molecular pump 100 used in this case, the exhaust velocity is 1300L (liters) /s class and the vacuum level is about 1×10-6Pa (pascals).

In Fig. 7, a dotted line shows the vibration in the conventional connecting structure for directly connecting the pump flange and the device-side flange by bolts, while a solid line shows the vibration in the connecting structure of the present invention for connecting the pump flange 201 and the device-side flange 203. The vibration shown by the solid line is reduced by up to 20 decibels or more in comparison with that shown by the dotted line. Fig. 8 is a graph showing, as shown in Fig. 7, a vibration reducing effect in the axial direction of the turbo-molecular pump. The vibration shown by a solid line is reduced by about 30 decibels in comparison with that shown by a dotted line.

Due to the isolation action of the O-ring 207 and the cylindrical elastic members 211, the electrical noise generated in the operation of the turbo-molecular pump 100 is prevented from being transmitted from the turbo-molecular pump 100 to the device. In this way, it is possible, with simple equipment, to reduce vibration while achieving electrical isolation. Further, providing the O-ring 207 and the cylindrical elastic members 211 requires quite a small installation space. Furthermore, the structure of the present invention can be incorporated into the outer cylinder 127 or the pump flange 201 of the turbo-molecular pump 100, which enables to perform mounting without requiring a larger installation space nor causing the reduction in the effective exhaust velocity.

In addition, used in the present invention are the O-ring 207 and the cylindrical elastic members 211, which undergo a small elastic deformation and do not undergo, when expanded and contracted, such a large deformation as a damper does, thereby the turbo-molecular pump 100 can be for example laid down for installation without causing any deflection.

Described in the present embodiment is the structure for connecting the pump flange 201 of the turbo-molecular pump 100 and the device-side flange 203. However, the present embodiment can be applied to any case where a pressure difference could be generated between one flange and the other flange. Thus, the present embodiment can be applied to connect flanges on the way of piping, for example. In addition, the present invention is not limited to the structure for connecting flanges, and can be applied to any structure for connecting members.

Further, in the present embodiment, the recess 206 is formed only in the pump flange 201. However, the O-ring 207 may be arranged between the recess 206 and a recess formed to be opposed to the recess 206 in the device-side flange 203. In addition, the recess 206 may be formed only in the device-side flange 203 instead of the pump flange 201.
The components such as the through holes, etc. of the pump flange 201 and those of the device-side flange 203 may be reversely arranged.

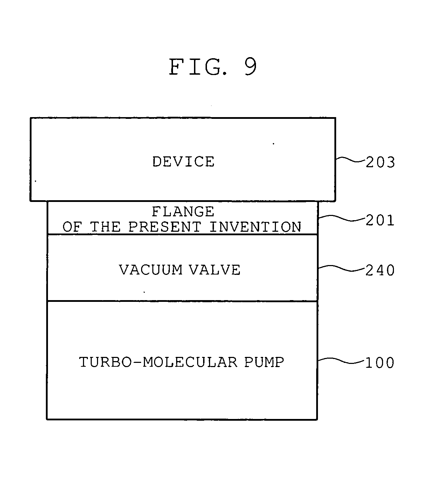

Furthermore, in the present embodiment, the turbo-molecular pump is directly connected to the device. However, as shown in Fig. 9, the connecting structure of the present invention may be applied to a flange provided to connect a device and a vacuum valve 240 which is connected to the top of the turbo-molecular pump 100.

Next, a second embodiment of the present invention will be described.

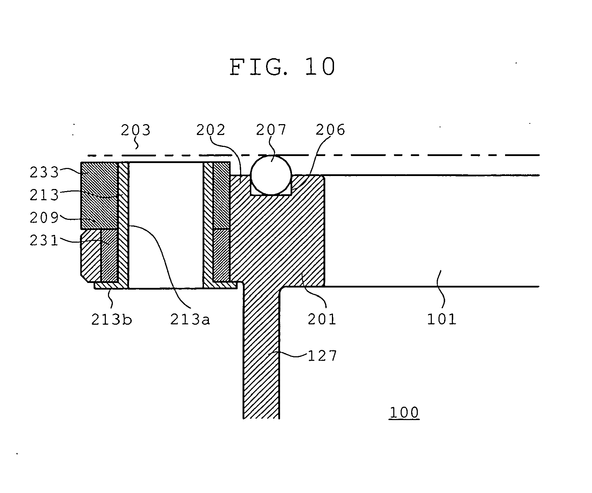

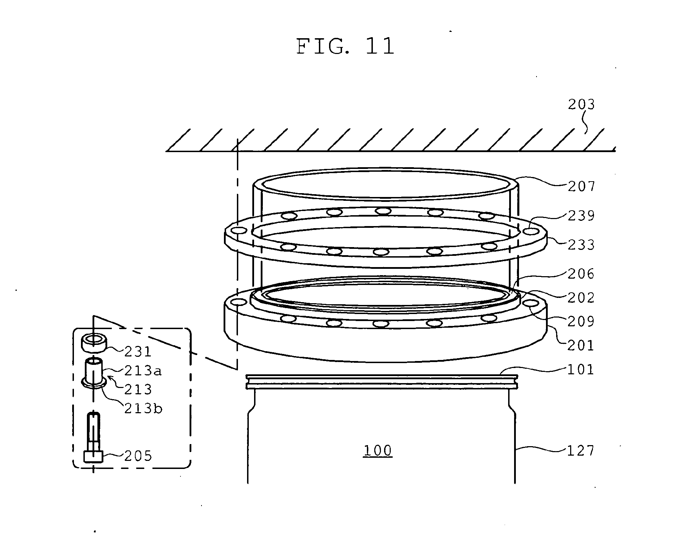

Fig. 10 is a partial longitudinal sectional view of the second embodiment of the present invention, and Fig. 11 is a perspective block diagram (assembly diagram) showing the surroundings of the pump flange.
The same components are denoted by the same references as in Figs. 2 and 3 and will not be described further.

In the first embodiment of the present invention, the cylindrical elastic members 211, which are formed so that the height thereof may be higher than that of the through holes 209 of the pump flange 201, protrude from the through holes 209. In the second embodiment of the present invention, cylindrical elastic members 231, instead of the cylindrical elastic members 211, are formed so that the height thereof may be equal to that of the through holes 209. On the top surface of the pump flange 201, an annular elastic member 233 made of rubber is provided to surround the flange salient 202. In the annular elastic member 233, through holes 239 are formed correspondingly to the through holes 209 of the pump flange 201.

Next, the operation of the second embodiment of the present invention will be described.
When the evacuation is performed in the operation of the turbo-molecular pump 100, the pump flange 201 moves upward due to the provision of the annular elastic member 233. At this time, a load is applied to the O-ring 207 and the load is partially applied to the annular elastic member 233 as well. Therefore, it is possible to prevent an excessive load from being applied only to the O-ring 207, thereby the life of the O-ring 207 can be extended.

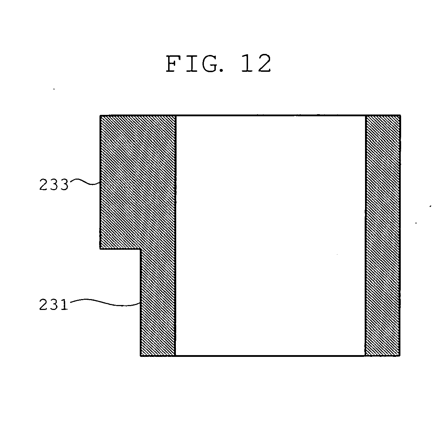

The annular elastic member 233 and the cylindrical elastic members 231 should not necessarily be formed to be separated from each other. As shown in a longitudinal sectional view in Fig. 12, the annular elastic member 233 and the cylindrical elastic members 231 may be formed to be unified with each other. The cylindrical elastic members 211 may be cut out by incorporating the functions thereof into the annular elastic member 233.

Further, the annular elastic member 233 should not necessarily be formed to be a single member surrounding the flange salient 202. The annular elastic member 233 may be divided into a plurality of members to be provided only in the places where the cylindrical elastic members 211 are provided.

Next, a third embodiment of the present invention will be described.

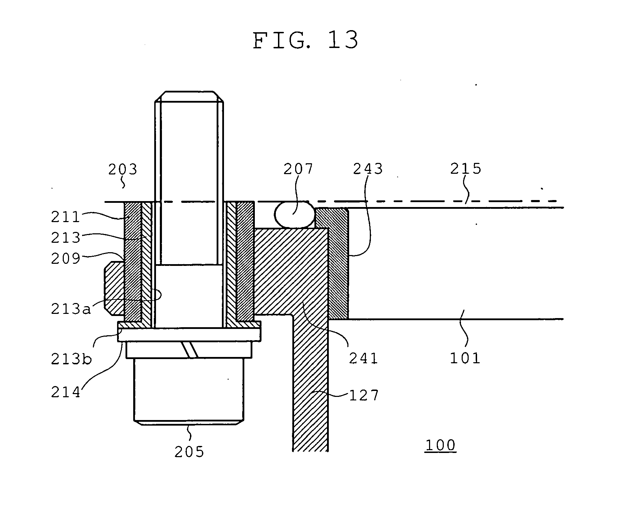

Fig. 13 is a partial longitudinal sectional view of the third embodiment of the present invention.
The same components are denoted by the same references as in Figs. 2 and 3 and will not be described further.

A pump flange 241 is formed at the top of the outer cylinder 127. The O-ring 207 is annularly provided around the inlet port 101 and is arranged between the pump flange 241 and the device-side flange 203. A centering 243 having an L-shaped cross section is fixed inside the O-ring 207. In Fig. 13, the right end of the O-ring 207 is contacted with the left surface of the centering 243. The other components are similarly constructed as in the first embodiment or the second embodiment of the present invention.

In this construction, when the evacuation is performed in the operation of the turbo-molecular pump 100, it is possible for the pump flange 241 to move upward due to the presence of the gap 215, which is formed between the centering 243 and the device-side flange 203 with the O-ring 207 interposed therebetween. At this time, the contact between the pump flange 241 and the brims 213b of the spacer collars 213 is released, and the pump flange 241 contacts only with the cylindrical elastic members 211. Therefore, a similar effect as in the first embodiment or the second embodiment of the present invention can be achieved.

Next, a fourth embodiment of the present invention will be described.

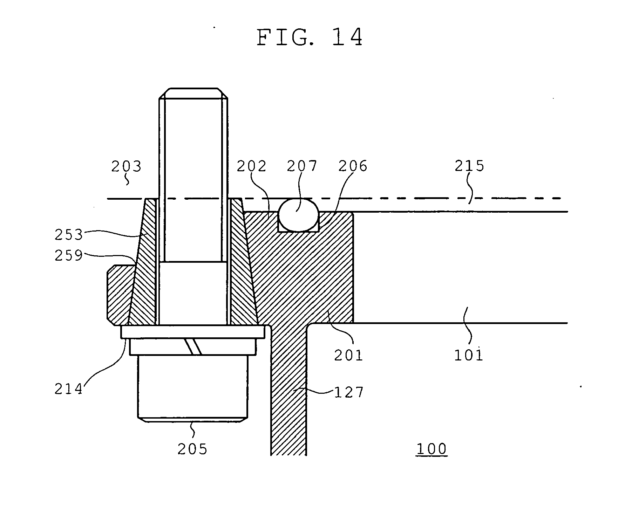

Fig. 14 is a partial longitudinal sectional view of the fourth embodiment of the present invention. The same components are denoted by the same references as in Figs. 2 and 3 and will not be described further.
The inner peripheral surfaces of through holes 259 formed in the pump flange 201 are tapered and the internal diameter thereof is gradually increased downward. In order to be fitted with the inner peripheral surfaces of the through holes 259, the outer peripheral surfaces of the spacer collars 253 are formed to be tapered. That is, the thickness of the spacer collars 253 is gradually increased downward. Fig. 14 shows a state where the spacer collars 253 are fixed to the device-side flange 203 by the bolts 205.

In this construction, both the outer peripheral surfaces of the spacer collars 253 and the inner peripheral surfaces of the through holes 259 are tapered, thereby the pump flange 201 is retained by the spacer collars 253 and the bolts 205 to be prevented from falling off.

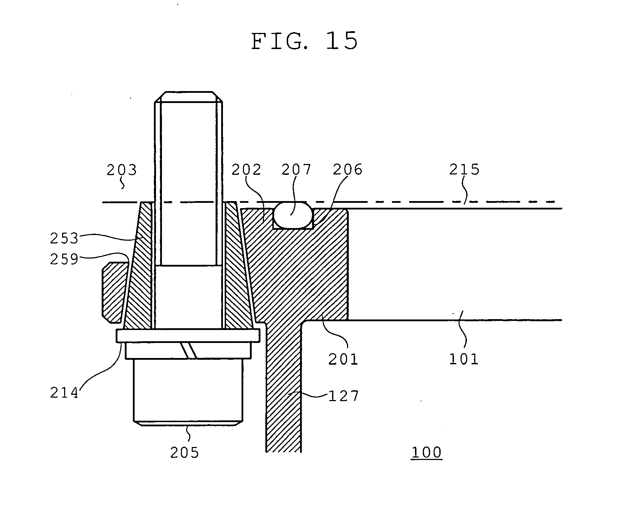

When the evacuation is performed in the operation of the turbo-molecular pump 100, the pump flange 201 moves upward and gaps are formed between the pump flange 201 and the spacer collars 253, as shown in Fig. 15. Thus, it is possible to reduce vibration while achieving electrical isolation. Further, the positions for fixing the bolts 205 can be easily determined. Even when the cylindrical elastic members 211 are cut out, the solid-to-solid contact between the pump flange 201 and the spacer collars 253 can be prevented. Further, even when the turbo-molecular pump 100 is disordered, the pump flange 201 can be sustained by the tapered surfaces of the spacer collars 253, thereby preventing the pump from falling off.

Both the outer peripheral surfaces of the spacer collars 253 and the inner peripheral surfaces of the through holes 259 should not necessarily be formed to be tapered. Only the former or the latter may be tapered.

Next, a fifth embodiment of the present invention will be described.

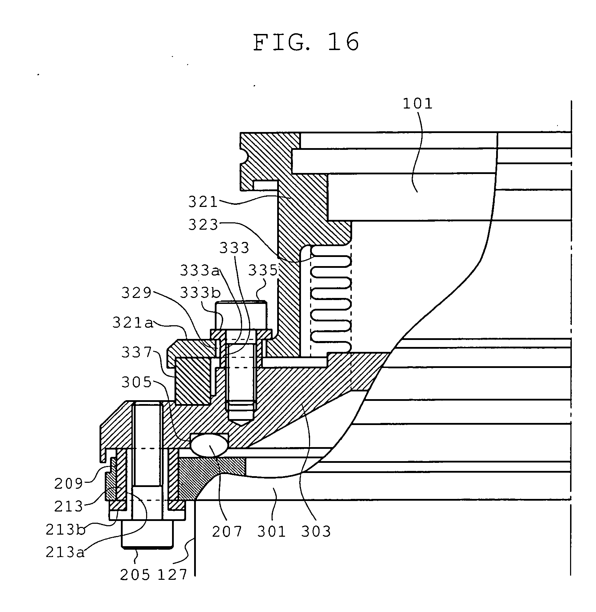

Fig. 16 is a partial longitudinal sectional view of the fifth embodiment of the present invention. The same components are denoted by the same references as in Fig. 4 and will not be described further. The fifth embodiment shows an example in which the present invention is applied to the turbo-molecular pump having a damper.

In Fig. 16, a pump flange 301 is opposed to an outer cylinder separation member 303, which is formed annularly. Differently from Fig. 4, a recess is not formed in the pump flange 301, and a recess 305 is formed in the surface of the outer cylinder separation member 303, the surface being opposed to the pump flange 301. The O-ring 207 is provided within the recess 305. Further, differently from Fig. 4, cylindrical elastic members are not provided, and only the spacer collars 213 are inserted into the through holes 209.

An inlet port cylinder 321 is linked to the top of the outer cylinder separation member 303 through a bellows 323 and is allowed to swing. The inlet port cylinder 321 is arranged to surround the suction space. The bottom of the bellows 323 is fixed to the outer cylinder separation member 303, while the top of the bellows 323 is fixed to the inlet port cylinder 321. A bottom portion 321 a of the inlet port cylinder 321 annularly protrudes, and through holes 329 are provided in the bottom portion 321 a. Further, inserted into each through hole 329 is a spacer collar 333 having a cylindrical body 333a and a discal brim 333b arranged at the top thereof. The bottoms of spacer collars 333 are contacted with the outer cylinder separation member 303.

Bolts 335 are penetrated through the through holes 329 and fixed to the outer cylinder separation member 303. An elastic member 337 made of rubber is sandwiched between the bottom portion 321 a of the inlet port cylinder 321 and the outer cylinder separation member 303.

In this construction, due to the provision of the bolts 335 and the spacer collars 333, the inlet port cylinder 321 does not easily come away from the outer cylinder separation member 303 even when a large load is applied to the inlet port cylinder 321 as in the case where the rotor 103 is disordered in its rotation, thereby the safety can be secured. Further, due to the provision of the elastic members 337 and the bellows 323, the bottom portion 321a of the inlet port cylinder 321 is controlled to move within the range of the height of the spacer collars 333. Thus, the elastic member 337 and the bellows 323 elastically deform within the range in which the vibration reduction is favorably performed, thereby an excellent vibration reduction can be constantly achieved.

When minute mechanical vibration generated in the rotation of the rotary blades 102 is transmitted to the outer cylinder separation member 303, the vibration is considerably reduced by the elastic deformation of the elastic member 337 and the bellows 323 to be transmitted to the inlet port cylinder 321. The action of the O-ring 207 is as described in the first embodiment of the present invention. Thus, the O-ring 207 can secure the airtightness, and further, the O-ring 207 can prevent the vibration generated in the operation of the turbo-molecular pump 100 from being transmitted through the solid-to-solid contact.

Due to the isolation action of the O-ring 207, the electrical noise generated in the operation of the turbo-molecular pump 100 is prevented from being transmitted from the turbo-molecular pump 100 to the device. In this way, it is possible, with simple equipment, to reduce vibration while achieving electrical isolation. Further, the combination of incorporating the damper into the turbo-molecular pump 100 and providing the O-ring 207 requires quite a small installation space. Thus, the effective exhaust velocity is not reduced.

In the present embodiment, the annular elastic member 233 made of rubber may be provided as in the second embodiment of the present invention. When the evacuation is performed in the operation of the turbo-molecular pump 100, the pump flange 201 moves upward due to the provision of the annular elastic member 233. At this time, a load is applied to the O-ring 207 and the load is partially applied to the annular elastic member 233 as well. Therefore, it is possible to prevent an excessive load from being applied only to the O-ring 207, thereby the life of the O-ring 207 can be extended.

### Detailed Description of Specific Embodiments

Next, the first embodiment of the present invention will be specifically described. The present embodiment can be applied to the other embodiments.
In Fig. 2 of the first embodiment, the bolts 205 are not fixed, and a height I1 of the O-ring 207 is a dimension gained by adding a common difference (-0.1 to +0.1 mm) to 6 mm, for example. The common difference at this time is the one used when the O-ring 207 is not crushed.

Further, with respect to the spacer collars 213, a height h measured from the top surfaces of the brims 213b to the top surfaces of the bodies 213a is a dimension gained by adding a common difference (-0.1 to +0.1 mm) to 18 mm. A height i measured from the top surfaces of the brims 213b to the top surface of the flange salient 202 is a dimension gained by adding a common difference (-0.1 to +0.1 mm) to 16.5mm. In addition, a depth j of the recess 206 is a dimension gained by adding a common difference (-0.05 to +0.05 mm) to 3.8 mm.

In Fig. 4, the bolts 205 are fixed. At this time, a height I2 of the O-ring 207 is a dimension gained by adding a common difference (-0.25 to +0.25 mm) to 5.3 mm. The O-ring 207 has to be kept crushed to perform the vacuum sealing.

In Fig. 6, the evacuation is performed by the turbo-molecular pump 100. At this time, the O-ring 207 is further crushed than as shown in Fig. 4, and a height I3 thereof is, according to experimental data, a dimension gained by adding a common difference (-0.3 to +0.3 mm) to 4.4 mm. In this case, it is needed for the bottom surface of the flange salient 202 to be separated from the brims 213b of the spacer collars 213 to form gaps therebetween.

With respect to each state as shown in Fig. 2, Fig. 4, and Fig. 6, the design value and the common difference as mentioned are used. Accordingly, in Fig. 2, the height gained by adding the height I1 of the O-ring 207 which is not crushed to the height measured from the top surfaces of the brims 213b to the bottom surface of the recess 206 is set to be larger than the height h measured from the top surfaces of the brims 213b to the top surfaces of the bodies 213a of the spacer collars 213. Thus, when the assembly is completed as shown in Fig. 4, the O-ring 207 is crushed to perform the vacuum sealing.

In Fig. 6, the height gained by adding the height I1 of the O-ring 207 which is further crushed due to the evacuation action to the height measured from the top surfaces of the brims 213b to the bottom surface of the recess 206 is set to be smaller than the height h measured from the top surfaces of the brims 213b to the top surfaces of the bodies 213a of the spacer collars 213. Thus, when the evacuation is performed as shown in Fig. 6; the bottom surface of the flange salient 202 is made apart from the brims 213b of the spacer collars 213.

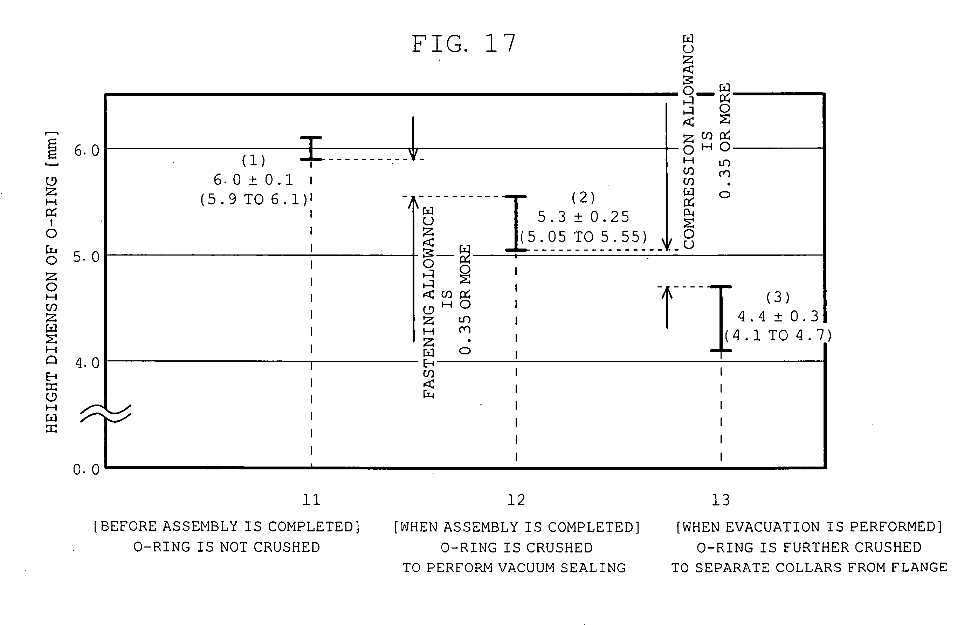

Fig. 17 shows the relationship among the height I1 of the O-ring 207 before the assembly is completed as shown in Fig. 2, the height I2 of the O-ring 207 when the assembly is completed as shown in Fig. 4, and the height I3 of the O-ring 207 when the evacuation is performed as shown in Fig. 6.

In Fig. 17, each I-shaped symbol shows the range of the common difference for the height of the O-ring: the upper end shows a maximum acceptable dimension for the height of the O-ring 207; and the lower end shows a minimum acceptable dimension for the height of the O-ring 207. In order to surely perform the vacuum sealing when the assembly is completed and to surely make the bottom surface of the flange salient 202 apart from the brims 213 of the spacer collars 213 when the evacuation is performed, the ranges of the common differences before the assembly is completed, when the assembly is completed, and when the evacuation is performed are needed to be set not to be overlapped with each other.

That is, in Fig. 17, when, for example, the minimum acceptable dimension for the height 11 of the O-ring 207 before the assembly is completed is compared with the maximum acceptable dimension for the height I2 of the O-ring 207 when the assembly is completed, the maximum acceptable dimension for the height I2 is lower than and is not overlapped with the minimum acceptable dimension for the height I1.

Similarly, when the minimum acceptable dimension for the height I2 of the O-ring 207 is compared with the maximum acceptable dimension for the height I3 of the O-ring 207 when the evacuation is performed, the maximum acceptable dimension for the height I3 is lower than and is not overlapped with the minimum acceptable dimension for the height I2.
As stated above, in Fig. 17, in order to surely perform and keep the functions required in each state, it is needed that the ranges of the common differences in respective states are not overlapped with each other.

When the height I1 of the O-ring 207 before the assembly is completed and the height I3 of the O-ring 207 when the evacuation is performed are determined, the range of the common difference for the height I2 of the O-ring 207 when the assembly is completed is required to be designed to be a difference range between the minimum acceptable dimension for the height 11 of the O-ring 207 before the assembly is completed and the maximum acceptable dimension for the height I3 of the O-ring 207 when the evacuation is performed. That is, the height I2 of the O-ring 207 when the assembly is completed has to be determined to be within a common difference which is smaller than the half of the difference range. When this state is secured, it is possible to surely perform the vacuum sealing when the assembly is completed, and to surely make the bottom surface of the flange salient 202 apart from the brims 213 of the spacer collars 213 when the evacuation is performed.

### Industrial Applicability

The present invention can be applied not only to the turbo-molecular pump but also to a semiconductor inspection device, a lithography device using an electron beam or a laser for forming a pattern on a semiconductor, an electron microscope, etc. The present invention can be partially applied to these devices or the members thereof.

## Claims

1. A structure for connecting end parts, comprising:
a first end part (203);
a second end part (201, 241, 301) in a hollowed shape situated in a position to be evacuated and opposed to the first end part (203);
a sealing member (207) having elasticity arranged between the second end part (201, 241, 301) and the first end part (203), **characterized in that**:
when the evacuation is performed, the first end part (203) and the second end part (201, 241, 301) come close to each other due to the difference between the inner pressure and the atmospheric pressure, causing elastic deformation of the sealing member (207), and at the same time a predetermined gap (215) is formed between the first end part (203) and the second end part (201, 241, 301) with the sealing member (207) interposed therebetween.

2. A structure for connecting end parts, comprising:
a first end part (203);
a second end part (201, 241, 301) in a hollowed shape situated in a position to be evacuated and opposed to the first end part (203);
at least one through hole (209, 239, 259) formed in the second end part (201, 241, 301);
fixing means (205) penetrated through the through hole (209, 239, 259) to be fixed to the first end part (203) while preventing the second end part (201, 241, 301) from falling off;
a first elastic member (211, 231) arranged between the fixing means (205) and the through hole (209, 239, 259), **characterized in that**:
when the evacuation is performed, the second end part (201, 241, 301) comes close to the first end part (203) due to the difference between the inner pressure and the atmospheric pressure, whereby the second end part (201, 241, 301) is released from a solid-to-solid contact.

3. A structure for connecting end parts, comprising:
a first end part (203);
a second end part (201, 241, 301) in a hollowed shape situated in a position to be evacuated and opposed to the first end part (203);
a sealing member (207) having elasticity arranged between the second end part (201, 241, 301) and the first end part (203);
at least one through hole (209, 239, 259) formed in the second end part (201, 241, 301);
fixing means (205) penetrated through the through hole (209, 239, 259) to be fixed to the first end part (203) while preventing the second end part (201, 241, 301) from falling off;
a first elastic member (211, 231) arranged between the fixing means (205) and the through hole (209, 239, 259), **characterized in that**:
when the evacuation is performed, the first end part (203) and the second end part (201, 241, 301) come close to each other due to the difference between the inner pressure and the atmospheric pressure, causing elastic deformation of the sealing member (207), and at the same time a predetermined gap (215) is formed between the first end part (203) and the second end part (201, 241, 301) with the sealing member (207) interposed therebetween, and the second end part (201, 241, 301) is released from a solid-to-solid contact.

4. A structure for connecting end parts according to Claim 2 or 3, further comprising:
a spacer collar (213, 253) arranged between the fixing means (205) and the first elastic member (211, 231), **characterized in that**:
the solid-to-solid contact is generated between the second end part (201, 241, 301) and one of the spacer collar (213, 253) and the fixing means (205).

5. A structure for connecting end parts according to any one of Claims 1, 3, and 4, **characterized in that** the sealing member (207) is retained by a recess or recesses (206, 305) formed in at least one of the first end part (203) and the second end part (201, 241, 301), or retained by a centering (243).

6. A structure for connecting end parts, comprising:
a first end part (203);
a second end part (201, 241, 301) in a hollowed shape situated in a position to be evacuated and opposed to the first end part (203);
a sealing member (207) having elasticity arranged at the second end part (201, 241, 301);
a recess (206) for holding the sealing member (207);
at least one through hole (209, 239, 259) formed in the second end part (201, 241, 301);
fixing means (205) penetrated through the through hole (209, 239, 259) to be fixed to the first end part (203) while preventing the second end part (201, 241, 301) from falling off, **characterized in that**:
a tolerance range for the height of the sealing member (207) when the fixing means (205) is fixed to the first end part (203) is within the range of the difference between a minimum acceptable dimension for the height of the sealing member (207) before the fixation is performed and a maximum acceptable dimension for the height of the sealing member (207) when the evacuation is performed.

7. A structure for connecting end parts, comprising:
a first end part (203);
a second end part (201, 241, 301) in a hollowed shape situated in a position to be evacuated and opposed to the first end part (203);
a sealing member (207) having elasticity arranged at the second end part (201, 241, 301);
a recess (206) for holding the sealing member (207);
at least one through hole (209, 239, 259) formed in the second end part (201, 241, 301);
fixing means (205) penetrated through the through hole (209, 239, 259) to be fixed to the first end part (203) while preventing the second end part (201, 241, 301) from falling off;
a spacer collar (213, 253) arranged between the fixing means (205) and the through hole (209, 239, 259), **characterized in that**:
before the fixing means (205) is fixed to the first end part (203), a dimension gained by adding the height from the bottom surface of the second end part (201, 241, 301) to the bottom surface of the recess (206) to the height of the sealing member (207) is larger than the height of the body of the spacer collar (213, 253), and when the evacuation is performed, a dimension gained by adding the height from the bottom surface of the second end part (201, 241, 301) to the bottom surface of the recess (206) to the height of the sealing member (207) is smaller than the height of the body of the spacer collar (213, 253).

8. A structure for connecting end parts according to any one of Claims 1 to 7, further comprising:
a second elastic member (233) arranged at the second end part (201, 241, 301), **characterized in that**:
when the evacuation is performed, the second end part (201, 241, 301) comes close to the first end part (203) due to the difference between the inner pressure and the atmospheric pressure, whereby the second elastic member (233) is pushed onto the first end part (203).

9. A structure for connecting end parts according to Claim 8, **characterized in that** the second elastic member (233) is formed to be unified with the first elastic member (211, 231).

10. A structure for connecting end parts according to any one of Claims 2, 3, 4, 6, and 7, **characterized in that** a bolt (205) is provided as the fixing means (205).

11. A structure for connecting end parts according to Claim 4 or 7, further comprising a brim (213b) arranged at the spacer collar (213, 253) for preventing the second end part (201, 241, 301) from falling off.

12. A structure for connecting end parts according to any one of Claims 4, 7, and 11, **characterized in that** at least one of the outer periphery of the spacer collar (213, 253) and the inner periphery of the through hole (209, 239, 259) is or are formed to be tapered.

13. A vacuum system having a structure for connecting end parts according to any one of Claims 1 to 12, **characterized in that** one of the first end part (203) and the second end part (201, 241, 301) is a flange (201, 241, 301, 203) arranged at any portion between a predetermined device to be evacuated and a vacuum pump (100) for evacuating the inside of the device.
